Europäisches Patentamt

European Patent Office

Office européen des brevets

(19)

(11) **EP 1 598 182 A1**

(12) **EUROPEAN PATENT APPLICATION**
published in accordance with Art. 158(3) EPC

(43) Date of publication:
**23.11.2005 Bulletin 2005/47**

(21) Application number: **04713681.7**

(22) Date of filing: **23.02.2004**

(51) Int Cl.[7]: **B32B 27/36**

(86) International application number:
**PCT/JP2004/002059**

(87) International publication number:
**WO 2004/073983 (02.09.2004 Gazette 2004/36)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **24.02.2003 JP 2003045316**
**01.05.2003 JP 2003126294**
**01.05.2003 JP 2003126293**
**30.06.2003 JP 2003186026**

(71) Applicant: **Mitsubishi Polyester Film Corporation Tokyo 108-0014 (JP)**

(72) Inventors:
• **SATO, Akira, Mitsubishi Polyester Film Corp. Maihara-shi, Shiga-ken 521-0234 (JP)**
• **SUZUKI, Takashi**
  **Mitsubishi Polyester Film Corp.**
  **Maihara-shi, Shiga-ken 521-0234 (JP)**

(74) Representative:
**TER MEER - STEINMEISTER & PARTNER GbR**
**Patentanwälte,**
**Mauerkircherstrasse 45**
**81679 München (DE)**

(54) **BIAXIALLY ORIENTED LAMINATED POLYESTER FILM AND POLYESTER FILM FOR LID MATERIAL**

(57) A biaxially stretched laminated polyester film having tensile break strengths in the machine and transverse directions of 40 to 200 MPa, and satisfying at least one of the following items: (1) wetting tension of at least one side of the film is not less than 48 mN/m; (2) surface resistivity of at least one side of the film is not more than $5 \times 10^{12}$ Ω/□; and (3) a barrier layer is provided on at least one side of the film. Such a film is suited for use as a composing material of packages for industrial materials, medicines, hygienic materials, foods, etc., and is also suited as a packaging material which excels in printing ink adhesion and also has excellent laminating compatibility with other materials, antistatic gas barrier properties and hand cutting quality. The present invention also pertains to a biaxially stretched laminated polyester film whose tensile break strength in the machine and transverse directions is 41 to 170 MPa, and such a film can be suitably used as a covering of receptacles of the type which is ripped off in use, such as a covering of press-through packages for medicines such as tablets and capsules, various kinds of foods, industrial parts, etc., and a covering of the cup-type drink containers of which the content is sucked through a straw thrust into the container by breaking through the cover.

Printed by Jouve, 75001 PARIS (FR)

EP 1 598 182 A1

**Description**

<u>TECHNICAL FIELD</u>

The present invention relates to a biaxially stretched laminated polyester film. More particularly, it relates to a biaxially stretched laminated polyester film which is suited for use as a constituent of packaging material such as industrial materials, medicines, hygienic materials, foodstuff, etc., and which is also useful as a packaging material which excels in printing ink adhesion, laminating compatibility with other materials, antistatic and gas barrier properties, and besides has excellent hand cutting quality. It is also relates to a biaxially stretched laminated polyester film which is suited for use as the coverings of the containers of the type which are broken when the content is to be taken out, for example, the coverings of the press-through packages for some forms of medicines such as tablets and capsules, various kinds of foodstuff, industrial parts, etc., and the coverings of the cup-type drink containers of which the content is sucked through a straw thrust into the container through the covering when it is desired to drink the content.

**BACKGROUND ART**

The package materials for the industrial materials, medicines, hygienic materials, foods and such are mostly required to have good hand cutting quality. For example, if a pouch type small package for sweet stuff, powdered medicine or such is possessed of good hand cutting quality, it is afforded a big merit that the content can be taken out with ease.

Cellophane or so-called moisture-proof cellophane obtained by coating cellophane with a vinyl chloride-vinyl acetate copolymer, and the films (K-coated cellophane) obtained by coating cellophane with vinylidene chloride are known as the material having good hand cutting quality.

This type of packaging materials are also required to have barrier properties such as oxygen barrier properties, moisture resistance and content fragrance retainability. To meet such a requirement, a method is used in which cellophane with good hand cutting quality is laminated with an aluminum foil with good barrier properties. For instance, a laminate structure of cellophane/printed matter/adhesive/aluminum foil/adhesive/polyethylene is used.

However, cellophane, moisture-proof cellophane and K-coated cellophane, although having excellent hand cutting quality, have the problems that their film properties are liable to change depending on ambient humidity and they are poor in printability. Also, cellophane used as base material is expensive and its supply in the future is uncertain. Further, as regard K-coated cellophane in particular, its use is unrecommendable in view of its adverse environmental effect (possibility of generating dioxin when this cellophane is burned). There is also a move to restrict use of aluminum foil because of its environmental effect.

Under such a dilemma, Japanese Patent Application Laid-Open (KOKAI) No. 5-104618 proposes use of a polyester film in place of cellophane as a packaging material with good hand cutting quality. Also, Japanese Patent Application Laid-Open (KOKAI) Nos. 2002-87459 and 2002-104496 propose a packaging material comprising a laminate of an ultra-thin polyester film and an aluminum foil.

In the packages for industrial materials, medicines, hygienic materials, foods, etc., usually ink printing is made on the film for indicating the content or for explaining how to treat the content, or the film is bonded to other material with an adhesive for raising functionality as a package. The polyester film surface, however, is poor in ink adhesion and compatibility with adhesives, and the improvements thereof have been required.

Further, use of the said polyester film as a packaging material for industrial materials, medicines, hygienic materials, foods, etc., often leads to various troubles as the film is liable to be electrically charged. For instance, in the case of the packages for powdery substances such as powdered medicine or powdery food or sliced substances such as flakes of dried bonito, there arises the problem that the content substance adheres to the package film and is hard to take out. Also, in the case of packages for industrial materials, in case where for instance an electronic device is packed, the packed article may be damaged by generating charge or discharge.

Also, the press-through packages (hereinafter referred to as PTP packages) for some forms of medicine such as tablets and capsules, various kinds of foodstuff, industrial parts and such involve the following problems.

The PTP packages are the packages of the type in which a polyvinyl chloride, polyolefin or polyester film is molded by drawing to form a plurality of recessed portions in which to contain a medicinal preparation such as tablet or capsule or a food, and each recession is topped by a cover which can be easily ripped off when taking out the content. The sheet formed with the recessions is usually called blister bottom. When the content substance in the package is pushed from the blister bottom side, the content substance can be easily taken out by breaking through the easy-to-rip covering.

In this type of packages, an aluminum foil is normally used as covering, but single use of an aluminum foil as covering has the problem that the covering could be broken when an inadvertent force is exerted to the molded portion though it is not actually desired to take out the content substance because aluminum foil can be torn too easy.

As a solution to the problems in single use of aluminum foil, Japanese Patent Application Laid-Open (KOKAI) No. 2002-178450 proposes lamination of a polyester film which has been subjected to an easy-to-cut treatment and an aluminum foil. This method, however, is costly because it includes the step of conducting an easy-to-cut treatment on the polyester film. Also, use of an aluminum foil has the problems of disposal of its waste and unusability of a metal detector. Use of a porous polyolefin in place of aluminum foil has been proposed, but this method has the problem that it is unable to provide the desired barrier properties.

The present invention has been made in view of the above circumstances, and its objects are as described below.

(1) The first object of the present invention is to provide a non-cellophane film showing good adhesion with ink and adhesives and also having good hand cutting quality.

(2) The second object of the present invention is to provide a non-cellophane film having excellent antistatic properties and good hand cutting quality, and to provide a non-cellophane film showing good adhesion with ink and adhesives and also having excellent antistatic properties and good hand cutting quality.

(3) The third object of the present invention is to provide an easy-to-tear film provided with excellent barrier properties by using a non-cellophane film without using an aluminum foil.

(4) The fourth object of the present invention is to provide a high-quality polyester film which needs no easy-to-cut treatment as base film of the coverings in which the polyester film is used in lamination with an aluminum foil, and to provide a polyester film having high-degree barrier properties as base film of the plastic coverings using no aluminum foil.

## DISCLOSURE OF THE INVENTION

The said objects of the present invention can be accomplished by embodying the following first and second aspects of the invention.

The first aspect of the present invention relates to a biaxially stretched laminated polyester film having tensile break strengths in the machine and transverse directions of 40 to 200 MPa, and satisfying at least one of the following items:

(1) wetting tension of at least one side of the film is not less than 48 mN/m;

(2) surface resistivity of at least one side of the film is not more than $5 \times 10^{12}$ Ω/□; and

(3) a barrier layer is provided on at least one side of the film.

This aspect of the present invention has been completed based on the present inventors' finding that the above-said first to third objects can be accomplished by satisfying at least one of the above-said requirements for specific wetting tension, surface resistivity and layer structure.

The second aspect of the present invention pertains to a biaxially stretched laminated polyester film for covering, which film has tensile break strength in the machine and transverse directions of 41 to 170 MPa.

This aspect of the present invention has been completed based on the present inventors' finding that the said fourth object of the present invention can be accomplished by providing a biaxially stretched laminated polyester film having a specific tensile break strength.

## BEST MODE FOR CARRYING OUT THE INVENTION

A detailed description of the present invention is given below. First, the biaxially stretched laminated polyester films provided in the said aspects of the present invention are explained.

The "polyesters" referred to in the present invention mean the polymers having ester groups that can be obtained by polycondensation of dicarboxylic acids and diols or hydroxycarboxylic acids. Examples of the dicarboxylic acids usable for the polycondensation include terephthalic acid, isophthalic acid, adipic acid, azelaic acid, sebacic acid, 2,6-naphthalenedicarboxylic acid, and 1,4-cyclohexanedicarboxylic acid. Examples of the diols include ethylene glycol, 1,4-butanediol, diethylene glycol, triethylene glycol, neopentyl glycol, 1,4-cyclohexanedimethanol, and polyethylene glycol. Examples of the hydroxycarboxylic acids include p-hydroxybenzoic acid and 6-hydroxy-2-naphthoic acid.

These polyesters can be produced by, for example, a method in which a lower alkyl ester of an aromatic dicarboxylic acid and a glycol are subjected to an ester exchange reaction, or an aromatic dicarboxylic acid and a glycol are directly esterified to form substantially a bisglycol ester of the aromatic dicarboxylic acid or a low polymer thereof, and this low polymer is polycondensed under reduced pressure and heating.

Typical examples of such polymers are polyethylene terephthalate and polyethylene-2,6-naphthalate. These polymers may be homopolymers or the polymers having a third component copolymerized therewith.

The biaxially stretched laminated polyester film of the present invention is preferably a laminated film comprising a layer (layer A) made of a polyester material comprising one or both of a copolymeric polyethylene terephthalate and a copolymeric polybutyrene terephthalate and a polyester layer (layer B). The melting point of the layer B is preferably 10°C or more higher than that of the layer A, and is preferably not lower than 245°C. By having this condition, the tear properties of the film are improved. If this condition is not satisfied, there is a problem that tensile strength at break of the film may exceed 200 MPa, the desired tear properties may not be attained.

The "copolymeric polyethylene terephthalate" is represented by a polyester in which the acid moiety comprises terephthalic acid and isophthalic acid and the glycol moiety comprises ethyleneg glycol. It can be produced by the known methods mentioned above. Other copolymeric substance(s) may be copolymerized therewith.

The "copolymeric polybutyrene terephthalate" is represented by a polyester in which the acid moiety comprises terephthalic acid and isophthalic acid and the glycol moiety comprises buthylene glycol, and it can be produced by the known methods mentioned above. Other copolymeric substance(s) may be copolymerized therewith.

Examples of other copolymeric substances include, as acid moiety, aliphatic dicarboxylic acids such as adipic acid, azelaic acid, sebacic acid and decanedicarboxylic acid, and aromatic carboxylic acids such as phthalic acid, 2,6-naphthalenedicarboxylic acid, 2,7-naphthalenedicarboxylic acid, 1,5-naphthalenedicarboxylic acid, diphenoxyethanedicarboxylic acid, diphenyldicarboxylic acid, diphenyletherdicarboxylic acid and anthracenedicarboxylic acid. As alcohol moiety, they include aliphatic diols such as diethylene glycol, propylene glycol, neopentyl glycol, butanediol, pentanediol and hexanediol, and polyalkylene glycols such as polyethylene glycol, polypropylene glycol and polytetramethylene glycol. These copolymeric substances may be used alone or as a mixture of two or more.

The ratios of the copolymers in the layer A are preferably selected so that the melting point of the layer A will become 10°C or more lower than that of the layer B. For example, in the case of copolymeric polyethylene terephthalate, the ratios of the copolymeric substances are selected so that when the composition was made into a polyester film, the melting point of the layer A will become not higher than 240°C, preferably 195 to 235°C, more preferably 215 to 235°C. More specifically, the percentage of, for instance, isophthalic acid in the whole dicarboxylic acid moiety in the layer A of the polyester film is selected to usually 1 to 25% by mole, preferably 1 to 20% by mole, more preferably 5 to 20% by mole, especially preferably 5 to 15% by mole.

As the polyester in the layer A, a copolymer with a high content of isophthalic acid may be used by diluting it with polyethylene terephthalate to a concentration in the above specified range.

In the polyester film of the present invention, it is preferable to contain fine particles as the presence of such fine particles in the film contributes to the improvement of workability in the film working steps such as winding, coating and depositing. Examples of these fine particles include, though not limited to, the inorganic particles such as particles of calcium carbonate, magnesium carbonate, calcium sulfate, barium sulfate, lithium phosphate, magnesium phosphate, calcium phosphate, lithium fluoride, aluminum oxide, silicon oxide and kaolin, the organic particles such as particles of acrylic resins and guanamine resins, and the precipitated particles such as those obtained by forming the catalyst residue into particles. The size and amount of these particles may be properly decided according to the purpose of use of the film. The fine particles to be contained may comprise either single component or two or more components. The method of blending these particles in the base material polyester is not specifically defined, but it is preferable to use, for instance, a method in which the particles are added in the polymerization step for forming the polyester or the base material polyester and the particles are mixed in a molten state.

Appropriate additives such as various types of stabilizer, lubricant, antistatic agent, etc., may be contained in each layer.

For producing the polyester film according to the present invention, a base material polyester comprising copolymeric polyethylene terephthalate and a single base material polyester are supplied to the respective known melt extruders and heated to a temperature above the melting point of the said polymer to melt it. Then the molten polymers are extruded in lamination through a slit die, and rapidly cooled on a rotary cooling drum to a temperature below the glass transition point and thereby solidified to obtain a non-oriented sheet of a substantially amorphous state. This sheet is stretched in two axial directions to form a film and heat set. Stretching may be effectuated either by stretching the sheet in two directions successively or by stretching the sheet in both directions simultaneously. If necessary, the film may be re-stretched in the machine and/or transverse direction before or after heat setting. In the present invention, in order to obtain sufficient dimensional stability and nerve as a packaging material, stretching is conducted to provide a stretch ratio of usually not less than 9 times, preferably not less than 12 times in terms of areal ratio, and thermal shrinkage of the film is preferably defined to be not more than 10%, more preferably not more than 5%, after left at 150°C for 30 minutes.

Thickness of the film of the present invention is usually 6 to 50 μm, preferably 9 to 38 μm, with the thickness of the layer A being preferably 50 to 90% of the overall thickness of the film. If the film thickness is below the above-defined range, the film will prove too weak in nerve, causing wrinkling or break of the film in its working process, and the obtained film may be found unsuited for use as a packaging material. Also, if the thickness of the layer A is too large, the film may have too high tear strength for use as a packaging material.

The first aspect of the present invention is explained.

Tensile break strength of the polyester film in the first aspect of the present invention falls within the range of 40 to 200 MPa, preferably 40 to 140 MPa, more preferably 50 to 120 MPa. Too high tensile break strength impairs tear properties of the film while too low tensile break strength may cause break of the film during its working, making the film unsuited for use as a packaging material.

The polyester film according to the first aspect of the present invention satisfies at least one of the following three items:

(1) wetting tension of at least one side of the film is not less than 48 mN/m,
(2) surface resistivity of at least one side of the film is not more than $5 \times 10^{12}$ Ω/□, and
(3) a barrier layer is provided on at least one side of the film.

First, the requirement of item (1) - wetting tension of at least one side of the film is not less than 48 mN/m - is explained by showing the embodiment of meeting such a requirement.

As means for making wetting tension of the film not less than 48 mN/m, there are available, for example, a method comprising a known surface treatment so as to afford good adhesion properties to the film, and a method in which a resin capable of providing good adhesion properties is incorporated in the layer B of the laminated polyester film. Specifically, the film is subjected to a surface treatment such as corona discharge treatment, corona discharge in a nitrogen atmosphere and/or a carbon dioxide gas atmosphere, plasma treatment, flame treatment, various types of solvent treatment and coating with a high polymeric compound, or polyalkylene glycol is incorporated in the layer B of the laminated polyester film. By affording such good adhesion properties to the film surface, it is possible to improve adhesion properties of the film with printing ink and adhesives. Coating with a high polymeric compound or incorporation of polyalkylene glycol is preferred to corona discharge treatment in that the good adhesion characteristic is less attenuated with time. If necessary, both incorporation of polyalkylene glycol in the layer B of the polyester film and corona discharge or plasma treatment may be applied in combination.

Exemplary of polyalkylene glycol incorporated in the layer B are polyethylene glycol, polytetramethylene glycol, polypropylene glycol, and ethylene glycol-propylene glycol copolymer, of which polyethylene glycol is preferred in view of thermal stability and adhesive performance. Such polyalkylene glycol is used in an amount of usually 0.1 to 5.0% by weight although variable depending on the polymerization degree and the type of polyalkylene glycol used.

Molecular weight of the said polyethylene glycol is usually 1,000 to 50,000, preferably 4,000 to 20,000. If its molecular weight is less than 1,000, the polyester is found low in thermal stability, which may make it difficult to form the desired film. Also, the obtained film may prove unsatisfactory in improvement of its adhesion properties. If the molecular weight of the polyethylene glycol used exceeds 50,000, its compatibility with the polyester becomes poor and the obtained film may produce an impression of non-transparency.

In case of using polyethylene glycol as the polyalkylene glycol, its amount added is usually 0.3 to 5.0% by weight. If its amount added is less than 0.3%, the desired good adhesion properties may not be obtained, and if its amount exceeds 5.0%, heat resistance of the polyester may lower and film productivity is liable to reduce.

The method of incorporating the polyalkylene glycol is not defined; for instance, it may be blended with the polyester or may be added in the polymerization process of the polyester. Especially preferable is a method in which a polyester copolymer with a high concentration of polyethylene glycol is prepared and this copolymer is blended with the polyester after diluted to a concentration in the range defined in the present invention. According to this method, it is possible to easily obtain a polyester film with good thermal stability.

The requirement of item (2) - surface resistivity on at least one side of the film is not more than $5 \times 10^{12}$ Ω/□ - is explained here.

The method of making film surface resistivity not higher than $5 \times 10^{12}$ Ω/□ is not specified; it can be achieved, for instance, by a method in which an antistatic agent is incorporated in the layer B or a method in which a coating layer containing an antistatic agent is provided.

It is even more preferable for a packaging film if it is provided with good adhesion properties with ink and adhesives in addition to antistatic properties. For affording good adhesion properties to the film, the method for providing good adhesion mentioned above with reference to item (1) can be used.

In case of providing a coating layer containing an antistatic agent, it is possible, by affording ink adhesion properties to this coating layer, to obtain an easy-to-tear film which excels in both antistatic and good adhesion properties.

A typical example of the antistatic agent usable for the above purpose is sulfonic acid metal salts such as alkylsulfonic acid metal salts, alkylbenzenesulfonates, alkylsulfoisophthalates, and alkylnaphthalenesulfonates. Metals in these metal salts are preferably lithium, potassium and sodium. Alkyl groups are preferably those with a carbon number of 8 to 30. Use of an alkyl group with a fewer carbon number tends to deteriorate compatibility with the polyester, while use of an alkyl group with a greater carbon number has a tendency to reduce the antistatic performance of the film.

An antistatic agent is contained in an amount of usually 0.05 to 10% by weight, preferably 0.1 to 5% by weight, based on the weight of the layer B. If the content of the antistatic agent is less than 0.05% by weight, the anticipated antistatic effect may not be obtained, and if its content exceeds 10% by weight, the film tends to become slippery and the film forming properties are liable to deteriorate.

In case of incorporating an antistatic agent, it is possible to use a mixture of the compounds differing in carbon number of the alkyl group in the said sulfonic acid metal salts. Also, a polyethylene glycol or a styrene oligomer may be added for bettering dispersibility,

As the antistatic agent to be contained in the coating layer, the afore-mentioned sulfonates, alkylsulfuric ester salts and cationic compounds can be cited as examples. It is preferable to provide an antistatic coating layer which can improve adhesion properties of the film.

The alkyl groups in the said sulfonates and alkylsulfuric ester salts are preferably those with a carbon number of 8 to 30. The alkyl groups with a fewer carbon number tend to adversely affect compatibility with the coating resin, while the alkyl groups with a greater carbon number tend to lower the antistatic effect.

The cationic compounds usable as the cationic antistatic agents in the present invention include, for example, the compounds having a quaternary ammonium base, namely the compounds having a constituent containing a quaternary ammonium base on the backbone or in the side chains in the molecule. Examples of such compounds are pyrrolidinium ring compounds, quaternarized alkylamines, those copolymerized with an acrylic or methacrylic acid, quaternarized N-alkylaminoacrylamides, vinylbenzyltrimethylammonium salts, and 2-hydroxy-3-methacryloxypropyltrimethylamine salts. These compounds may be combined with each other or copolymerized with other resins. The anions forming the counter ions of these quaternary ammonium salts may be, for instance, the ions of halogens, alkyl sulfates, alkyl sulfonates, nitric acid and such.

The compounds having the said quaternary ammonium bases are preferably the high polymeric compounds. Number-average molecular weight of these high polymeric compounds is usually not less than 1,000, preferably not less than 2,000, more preferably not less than 5,000 but not more than 500,000. If the molecular weight of these compounds is less than 1,000, the antistatic agent may bleed out and transfer to the contacting side of the film. If the molecular weight is more than 500,000, the coating solution may be increased in viscosity to deteriorate coating performance.

Thickness (dry thickness) of the antistatic layer is usually 0.003 to 1.5 μm, preferably 0.005 to 0.5 μm. If its thickness is less than 0.003 μm, the desired antistatic performance may not be obtained, and if the layer thickness exceeds 1.5 μm, blocking of the films tend to take place.

For forming the coating layer containing an antistatic agent on the polyester film, there are available a method in which coating is made on a biaxially stretched film by using the conventional techniques and a method in which coating is conducted in the process of production of the polyester film using the conventional techniques. Either of these methods can be used. More specifically, in a successive biaxial stretching method, a water dispersion containing an antistatic agent is coated on the film which has undergone monoaxial stretching in the machine direction, and the coated film is further stretched in the transverse direction and then heat treated, or the said dispersion is coated on the biaxially stretched film and then dried. The successive biaxial stretching method, in which coating is conducted on the monoaxially stretched film and the coated film is further stretched in the transverse direction and then heat treated, is preferable as it is possible with this method to form a thin and uniform coat.

For coating the polyester film with a coating solution containing an antistatic agent, various known coating techniques such as shown in Y. Harasaki: Coating Systems, Maki Shoten, 1979. Specifically, such coating devices as air doctor coater, blade coater, rod coater, knife coater, squeeze coater, dip coater, reverse roll coater, transfer roll coater, gravure coater, kiss-roll coater, cast coater, spray coater, curtain coater, calender coater, extrusion coater and bar coater, and the methods using these coating devices can be used.

In the mode of practice for satisfying the requirement of item (2), polyalkylene glycol may be incorporated in the layer B for the purpose of affording the desired adhesion properties to the film as in the case of item (1) mentioned above. The properties of the polyalkylene glycol used, its amount incorporated and the method for its incorporation are the same as described in the explanation of item (1).

Now, the requirement of item (3) - a barrier layer is provided on at least one side of the film - is explained.

The barrier layer is not specified regarding its material; it may be, for instance, a layer formed by coating a solution of a high polymeric compound or a solution of a mixture of a high polymeric compound and an inorganic compound, and drying the coat, or a layer formed by depositing a metal or a metal oxide on the film.

As examples of the said high polymeric compounds, the resins having a Permachor value of not less than 75 cal/cc (such as polyvinyl alcohol resins and vinylidene chloride resins) and the acrylic resins disclosed in Japanese Patent Application Laid-Open (KOKAI) No. 2000-37822 can be mentioned.

As means for providing a barrier layer, there are used a method in which a barrier layer is provided after forming the film and a method in which a barrier layer is provided in the film forming process. For instance, in the successive biaxial stretching method, a coating solution for forming a barrier layer is applied on the film which has been monoaxially stretched in the machine direction, and the coated film is further stretched in the transverse direction and then heat treated, or the coating solution is applied on the biaxially stretched film and dried.

Examples of the metals and/or metal oxides to be deposited include aluminum, silicon, magnesium, palladium, zinc, tin, nickel, silver, copper, gold, indium, stainless steel, chromium, titanium, oxides of these metals, and mixtures thereof. As the depositing method, generally vacuum deposition is used, but it is also possible to use other methods such as ion plating, sputtering and CVD. For instance, in case of depositing silicon oxide, a CVD method is used in which a gas of a reactive silicon compound such as hexamethyldisiloxane and oxygen are charged into a state of plasma and reacted to form a deposit on the film surface. The deposited metal or metal oxide film thickness is usually 5 to 500 nm, preferably 10 to 200 nm, although variable depending on the final use of the deposited film.

In order to secure close adhesion between the said barrier layer and the polyester film or to allow maximum performance of the barrier layer, it is preferable to initially provide an undercoating layer on the film surface and provide a barrier layer thereon. Presence of such an undercoating layer is particularly expedient in case where the barrier layer is made of a metal or a metal oxide. The undercoating layer in the present invention may be provided after forming the film, and it is preferable to provide this layer in the film forming process in view of production cost. For example, in the case of the successive biaxial stretching system, it is suggested to adopt a method in which a coating solution for the undercoating layer is applied on the film after it has been monoaxially stretched in the machine direction, and then the film is further stretched in the transverse direction and then heat treated, or a method in which the coating solution is applied on the biaxially stretched film and dried. The former method comprising applying a coating solution for the undercoating layer on the monoaxially stretched film, stretching in the transverse direction and then heat treating is preferred because it is possible with this method to form a thin and uniform coating layer.

The resin used for the undercoating is preferably an aqueous high-molecular weight resin which can be dissolved, emulsified or suspended in water. Examples of such resins include polyurethane resins, polyacrylic resins, polyester resins, epoxy resins, polyvinyl alcohol resins, polyvinylidene chloride resins, polystyrene resins, polyvinyl pyrrolidone, and copolymers thereof. These compounds can be used alone or as a mixture of two or more.

A crosslinking agent is preferably used as a component of the coating solution for improving solvent resistance, water resistance, anti-blocking properties and scratch resistance of the coating layer. As such a crosslinking agent, hydroxymethylated or hydroxyalkylated urea-based, melamine-based, guanamine-based, acrylamide-based and amide-based compounds, epoxy compounds, aziridine compounds, polyisocyanurates, blocked polyisocyanurates, oxazoline group-containing water-soluble polymers, silane coupling agent, titanium coupling agent, zirco-aluminate coupling agent and the like can be used. Also, in order to improve coating properties, inorganic or organic particles, lubricant, antistatic agent, defoaming agent and such may be contained in the coating solution within limits not impairing the effect of the present invention.

For applying the coating solution on the polyester film, the method explained above with reference to the requirement of item (2), in which a coating solution containing an antistatic agent is applied on a polyester film, can be used.

Next, the second aspect of the present invention is explained. In the biaxially stretched laminated polyester film for covering in the second aspect of the present invention, tensile break strength in both machine and transverse directions is 41 to 170 MPa, preferably 50 to 150 MPa. If tensile break strength of the film exceeds 170 MPa, tear properties of the film are vitiated, and if it is below 50 MPa, the film may break during its working and is therefore unsuited for use as a packaging material.

In case where the covering is not required to have barrier properties, a sealant layer is provided on the film in the form as it is or after making a print as required, and this film is sealed to the blister bottom housing a content substance such as a tablet. On the other hand, in order to enhance the preservation property of content, the covering whose burrier properties are enhanced is often used.

Since the blister bottom of the PTP packages is not planar, it is difficult to print thereon information regarding the content, so that printing is mostly made on the covering. Since a transparent sheet is mostly used for the blister bottom, printing can be made either on the inner surface or on the outer surface of the covering. Also, in order to make printed information easier to recognize, the film for covering of the present invention may be a biaxially stretched film having an opacifying effect. For providing such an opacifying effect to the film, methods are known in which the particles of such a material as titanium dioxide, calcium carbonate, barium sulfate or carbon black are contained in the polyester film. Use of titanium dioxide is especially preferred in view of high opacifying effect and good appearance of the film. The average particle diameter (dA) of titanium dioxide is usually 0.20 to 0.50 μm, and it is added in an amount of usually 3 to 30% based on the weight of the layer in which this compound is incorporated.

The film in the second aspect of the present invention preferably has barrier properties. The method of imparting barrier properties to the film is not specified in the present invention; it can be attained, for instance, by providing a barrier layer in lamination. More specifically, this can be effected by a method in which an aluminum foil is laminated, a method in which a solution of a high polymeric compound or a solution of a mixture of a high polymeric compound and an inorganic compound is applied on the film and dried, or a method in which a metal or a metal oxide is deposited on the film.

For laminating an aluminum foil, usually an adhesive is used. The thickness of aluminum foil used is usually 9 to 25 μm. If its thickness is too small, the foil will easily break, while if its thickness is too large, the foil will become costly. As the adhesive, there can be used those known in the art, such as polyester adhesives, epoxy adhesives, isocyanate adhesives, urethane adhesives and acrylic adhesives.

The high polymeric compounds usable for the barrier layer of the film in the second aspect of the present invention and the methods of preparing these compounds are identical with those described above with reference to the first aspect of the present invention.

Also, in the film according to the second aspect of the present invention, the type of the metal and/or metal oxide to be deposited, its deposition method and thickness of the deposit are the same as described in the explanation of the requirement of item (3) in the first aspect of the present invention.

In the film in the second aspect of the present invention, in order to ensure fast adhesion between the barrier layer and the polyester film or to derive the maximum performance of the barrier layer, preferably an undercoating is previously provided on the surface of the polyester film and then a barrier layer is provided thereon. The makeup of the undercoating and its forming method are the same as described in the explanation of the requirement of item (3) in the first aspect of the present invention.

EXAMPLES

The present invention is described in more detail with reference to the embodiments thereof, but it should be understood that the present invention is not limited to these embodiments but can be embodied otherwise as well without departing from the scope and spirit of the invention. In the following descriptions of the Examples and the Comparative Examples, all "parts" are by weight unless otherwise noted. The measuring methods used in the following embodiments are as described below.

(1) Measurement of intrinsic viscosity [η] (dl/g) of the polymers:

1 g of polymer was dissolved in 100 ml of a phenol/tetrachloroethane (50/50 by weight) mixed solvent, and intrinsic viscosity of the solution was measured by an Ubbellohde viscometer at 30°C.

(2) Measurement of film thickness:

10 pieces of film were stacked, and the overall thickness of this pile of films was measured by a micrometer and divided by 10 to determine the mean value, which was presented as film thickness.

(3) Measurement of thickness of laminated polyester layer:

A small piece of film was molded with an epoxy resin by a stationary mold and cut by a microtome, and the cut section of the film was observed by transmission electron microphotographs. At the cut section of the film, there were observed two lines of interface substantially parallel to the film surface by light and darkness. The distance from these two lines of interface to the film surface was measured with reference to each of the 10 pieces of photograph, and the mean value of the measurements on 10 pieces of photograph was determined and presented as thickness of the laminated polyester film.

(4) Measurement of melting point:

Melting point (Tm) of the film was measured by a differential scanning calorimeter DSC-7 mfd. by PerkinElmer Japan Co., Ltd. under the following conditions. 6 mg of the sample film was set in DSC-7, melted and kept in a molten state at 300°C for 5 minutes and then rapidly cooled with liquid nitrogen. The rapidly cooled sample was then heated at a heating rate of 10°C/min, detecting the melting point.

(5) Measurement of tensile break strength:

Using an Intesco tensile tester Model 2001, and in a chamber adjusted to 23°C and 50% RH, the sample film measuring 50 mm in length (the length between chucks) and 15 mm in width was pulled at a strain rate of 200 mm/min. The load at break of the film was measured, and its tensile break strength was determined from the following equation:

Tensile break strength (MPa) = load at break

(N)/sectional area (mm$^2$) of the sample film

(6) Measurement of thermal shrinkage:

The film was cut into a 35 mm $\times$ 1,000 mm strip to make a sample, and it was subjected to a 30-minute heat treatment in a 150°C oven (circulating hot air oven mfd. by Tabai Espec Corp. in a tension-less state. The length of the sample film before and after the heat treatment was measured, and thermal shrinkage of the film was determined from the following equation:

Thermal shrinkage (%) = [(a - b)/a] $\times$ 100

(wherein a is the length (mm) of the sample before heat treatment and b is the length (mm) after heat treatment).

(7) Measurement of haze:

Haze of the film was measured by an integrating sphere type turbidimeter NDH-20D (mfd. by Nippon Denshoku Industries Co., Ltd.) according to JIS K7105.

(8) Measurement of tear properties:

It was tried to tear the film without giving any notch to the film to see weather it could be torn smoothly with hands. Tear properties were rated according to the following gradation. Rating was made in both machine direction (MD) and transverse direction (TD).

    A rating: When the sample film could be torn easily with hands, it was rated A.
    B rating: When the sample film could be torn relatively easily with hands, it was rated B.
    C rating: When the sample film could not be torn easily with hands, it was rated C.

(9) Wetting tension:

It was measured using a wetting index reagent (produced by Nacalai Tesque, Inc.) according to JIS-K6768-1977.

(10) Ink adhesion:

Celocolor printing ink CCST39 Indigo produced by TOYO INK MFG. CO., LTD. was coated on the film surface so that the coating thickness after drying would become 1.5 μm, and hot air dried at 80°C for one minute to make a film for evaluation. This film for evaluation was subjected to 24-hour temperature and moisture conditioning at 23°C and 50% RH, then a Nichiban Cellotape (registered trade mark) (18 mm wide) was stuck on the ink coated side of the film along the length of 7 cm with care so as not to allow entrance of air cells, and a constant load was given thereon by a 3 kg manual loading roll. With the film fixed, one end of the cellophane tape was connected to a 500 g weight, and the weight was let drop gravitationally through a distance of 45 cm, causing peel of the tape in the direction of 180°. Adhesion properties were evaluated according to the following three-rating formula:

    Rating 3: There took place absolutely no separation of ink from the film surface.
    Rating 2: There was seen ink separation from the film surface, but the area where ink separation occurred was less than 10%.
    Rating 1: Ink separation occurred in the area more than 10%.

If adhesion is rated as 3 or 2 in the above rating formula, there is no problem for practical use.

(11) Measurement of surface resistivity:

A concentric circular electrode unit 16008A (mfd. by Yokokawa Hewlet Packard, Ltd.) with a 50 mmφ inner electrode and a 70 mmφ outer electrode was set on the sample in an atmosphere of 23°C and 50% RH, and volume resistivity of the sample was measured by a high resistance meter 4329A (mfd. by the same company) by applying a voltage of 100 V to the sample.

(12) Measurement of oxygen transmittance:

This was measured by an isotactic method at 25°C and 60% RH according to JIS K-7126.

(13) Transmitted light density (OD):

The optical density of the light which has passed the G filter was measured by a Macbeth densitometer TD-904.

(14) Evaluation of the film as covering of PTP packages (evaluation of tear-open properties of the film):

A covering was made with the sample film, and after applying a polyester sealant, the covering was attached to the tablet-housing blister bottom and sealed. For taking out the content (tablet) from the thus obtained PTP package, the tablet was pushed from the blister bottom side and the tear-open properties of the covering (film) was evaluated according to the following rating:

A: Tablet could be taken out in a satisfactory way.
B: Tablet sprang out.
C: Tablet could not be taken out.

The polyesters used as base material in the following Examples and the Comparative Examples were produced in the manner described below.

<Production of polyester 1>

Polyester 1 was produced using terephthalic acid as dicarboxylic acid moiety and ethylene glycol as polyhydric alcohol moiety according to a conventional melt polycondensation method, and the polyester chips containing 0.18 part of amorphous silica with an average particle diameter of 2.5 μm and having a melting point (Tm) of 254°C and an intrinsic viscosity ([η]) of 0.70 were obtained.

<Production of polyester 2>

Polyester 2 was produced using isophthalic acid and terephthalic acid as dicarboxylic acid moiety and ethylene glycol as polyhydric alcohol moiety according to a conventional melt polycondensation method. The isophthalic acid content in the dicarboxylic acid moiety was 6% by mole. The obtained polyester chips had a melting point (Tm) of 239°C and an intrinsic viscosity ([η]) of 0.69.

<Production of polyester 3>

Polyester 3 was produced using isophthalic acid and terephthalic acid as dicarboxylic acid moiety and ethylene glycol as polyhydric alcohol moiety by a conventional melt polycondensation method. The isophthalic acid content in the dicarboxylic acid moiety was 15% by mole. Melting point (Tm): 220°C; intrinsic viscosity ([η]): 0.69.

<Production of polyester 4>

Polyester 4 was produced using isophthalic acid and terephthalic acid as dicarboxylic acid moiety and ethylene glycol as polyhydric alcohol moiety by a conventional melt polycondensation method. The isophthalic acid content in dicarboxylic acid moiety was 22% by mole. Melting point (Tm): 200°C; intrinsic viscosity ([η]): 0.69.

<Production of polyester 5>

Polyester 5 was obtained by blending 35 parts of polyester 1 and 65 parts of polyester 4. The content of isophthalic acid in polyester 5 was 14% by mole.

<Production of polyester 6>

This polyester was produced using isophthalic acid and terephthalic acid as dicarboxylic acid moiety and 1,4-butanediol as polyhydric alcohol moiety according to a conventional melt polycondensation method. The isophthalic acid content in dicarboxylic acid moiety was 11% by mole. Melting point (Tm): 218°C; intrinsic viscosity ([η]): 0.80.

<Production of polyester 7>

90.0 parts of dimethyl terephthalate, 61 parts of ethylene glycol and 10 parts of polyethylene glycol having a molecular weight of 8,000 were supplied into a reactor and reacted in the usual way using calcium acetate monohydrate as catalyst to obtain an oligomer. Then 0.18 part of amorphous silica having an average particle diameter of 2.5 μm and an antimony trioxide catalyst were added, and the mixture was polymerized by a conventional method to obtain a copolymer polyester containing 10% of polyethylene glycol.

<Production of polyester 8>

20 parts of sodium alkylsulfonates with carbon numbers of 14, 15 and 16 were blended with 80 parts of polyester 1, and the mixture was melt extruded to obtain polyester chips.

<Examples 1-1 to 1-4 and Comparative Example 1>

These examples are designed for explaining the embodiments of the present invention for satisfying the requirement of item (1) in the first aspect of the present invention.

Example 1-1:

The pellets of polyester 1 and the pellets of polyester 7 were blended in a ratio of 90 to 10 to prepare a base material (blend I). This blend I and the pellets of polyester 3 were melted in the separate extruders and passed through a lamination die to extrude a binary (2-component) 3-layer laminated polyester resin with a structure of blend I (layer B)/polyester 3 (layer A)/blend I (layer B) onto a cooling drum with a surface temperature of 30°C whereby the extrudate was rapidly cooled to obtain a non-stretched film with a thickness of about 180 μm. This film was stretched 3.8 times in the machine direction at 80°C, then after preheated in a tenter, further stretched 4.0 times in the transverse direction at 90°C and then heat treated at 230°C for 10 seconds to obtain a 12 μm thick laminated polyester film. Thickness profile of the layer B/layer A/layer B structure was 1.5 μm/9 μm/1.5 μm. The properties of the obtained film are shown in Table 1. This film showed excellent ink adhesion and had good hand cutting quality.

Example 1-2 :

The pellets of polyester 1 and the pellets of polyester 7 was blended in a ratio of 97 to 3 to prepare a base material (blend II), and this blend II and the pellets of polyester 2 were melted in the separate extruders and passed through a lamination die to extrude a binary 3-layer laminated polyester resin having a structure of blend II (layer B)/polyester 2 (layer A)/blend II (layer B) onto a cooling drum having a surface temperature of 30°C whereby the extrudate was rapidly cooled to obtain an approximately 180 μm thick non-stretched film. This film was stretched 3.8 times in the machine direction at 80°C, then after preheated in a tenter, further stretched 4.0 times in the transverse direction at 90°C and heat treated at 230°C for 10 seconds to obtain a 12 μm thick laminated polyester film. Thickness profile of the layer B/layer A/layer B structure was 1.5 μm/9 μm/1.5 μm. The properties of the obtained film are shown in Table 1. This film was inferior to that of Example 1 in ink adhesion and hand cutting quality, but was of a practical quality level.

Example 1-3:

The pellets of polyester 1 and the pellets of polyester 5 were melted in the separate extruders and passed through a lamination die to extrude a binary 3-layer (polyester 1 (layer B)/polyester 5 (layer A)/polyester 1 (layer B)) laminated polyester resin onto a cooling drum with a surface temperature of 30°C whereby the extrudate was rapidly cooled to obtain an approximately 250 μm thick non-stretched film. This film was stretched 3.8 times in the machine direction at 80°C, then after preheated in a tenter, further stretched 4.1 times in the transverse direction at 90°C by a tenter, and then heat treated at 225°C for 10 seconds to obtain a 16 μm thick laminated polyester film. Thickness profile of the layer B/layer A/layer B structure was 2 μm/12 μm/2 μm. This film was subjected to a corona discharge treatment by a corona discharge treating device mfd. by Kasuga Electric Co., Ltd. to provide a wetting tension of 56 mN/m to the film. The properties of the obtained film are shown in Table 1. This film excelled in ink adhesion and also had good hand cutting quality.

Example 1-4:

The pellets of polyester 1 and the pellets of polyester 6 were melted in the separate extruders and passed through a lamination die to extrude a binary 3-layer (polyester 1 (layer B)/polyester 6 (layer A)/polyester 1 (layer B)) laminated polyester resin onto a cooling drum with a surface temperature of 30°C whereby the extrudate was rapidly cooled to obtain an approximately 250 μm thick non-stretched film. This film was stretched 3.8 times in the machine direction at 80°C, then after preheated in tenter, further stretched 4.1 times in the transverse direction at 90°C and heat treated at 230°C for 10 seconds to obtain a 16 μm thick laminated polyester film with a thickness profile of layer B/layer A/layer B = 2 μm/12 μm/2 μm. This film was subjected to a corona discharge treatment by a corona discharge treating device mfd. by Kasuga Electric Co., Ltd. to provide a wetting tension of 56 mN/m to the film. The properties of the obtained film are shown in Table 1. This film showed excellent ink adhesion and also had good hand cutting quality.

Comparative Example 1:

A film was obtained by repeating the same procedure as defined in Example 1-1 but by using as the layer A material a polyester having a molar ratio of the isophthalic acid moiety of 3%, obtained in the same way as polyester 2, while using as the layer B material a blend having a polyethylene glycol content of 0.2% obtained in the same way as in Example 1-1. The properties of the obtained film are shown in Table 1. This film was poor in hand cutting quality and ink adhesion.

## Table 1

|  | Example 1-1 | Example 1-2 | Example 1-3 |
|---|---|---|---|
| Thickness (μm) (B/A/B) | 1.5/9.0/1.5 | 1.5/9.0/1.5 | 2.0/12.0/2.0 |
| Layer A melting point (°C) | 227 | 239 | 230 |
| Layer B melting point (°C) | 254 | 254 | 255 |
| Corona discharge treatment | No | No | Yes |
| Tensile break strength, machine direction (MPa) | 90 | 180 | 80 |
| Tensile break strength, transverse direction (MPa) | 90 | 190 | 90 |
| Thermal shrinkage, machine direction (%) | 2.5 | 2.5 | 2.5 |
| Thermal shrinkage, transverse direction (%) | 2.5 | 2.5 | 2.5 |
| Haze (%) | 3 | 3 | 3.1 |
| Tear properties | A | B | A |
| Wetting tension (mN/N) | 54 | 48 | 56 |
| Ink adhesion | 3 | 2 | 3 |

Table 1 (Continued)

| | Example 1-4 | Comp. Example 1 |
|---|---|---|
| Thickness (μm) (B/A/B) | 2.0/12.0/2.0 | 1.5/9.0/1.5 |
| Layer A melting point (°C) | 242 | 245 |
| Layer B melting point (°C) | 255 | 254 |
| Corona discharge treatment | Yes | No |
| Tensile break strength, machine direction (MPa) | 90 | 210 |
| Tensile break strength, transverse direction (MPa) | 100 | 230 |
| Thermal shrinkage, machine direction (%) | 2.5 | 2.1 |
| Thermal shrinkage, transverse direction (%) | 2.3 | 2.1 |
| Haze (%) | 3.2 | 2.9 |
| Tear properties | A | C |
| Wetting tension (mN/N) | 56 | 46 |
| Ink adhesion | 3 | 1 |

<Examples 2-1 to 2-4 and Comparative Example 2>

These examples are presented for explaining the embodiments of the present invention for satisfying the requirement of item (2) in the first aspect of the present invention.

Example 2-1:

A 97:3 blend (blend I) of pellets of polyester 1 and pellets of polyester 8 was prepared. This blend I and the pellets of polyester 3 were melted in the separate extruders and passed through a lamination die to extrude a binary 3-layer (blend I (layer B)/polyester 3 (layer A)/blend I (layer B)) laminated polyester resin onto a cooling drum with a surface temperature of 30°C whereby the extrudate was rapidly cooled to obtain an approximately 180 μm thick non-stretched film. This film was stretched 3.8 times in the machine direction at 80°C, then after preheated in a tenter, further stretched 4.0 times in the transverse direction at 90°C, and heat treated at 230°C for 10 seconds to obtain a 12 μm thick laminated polyester film. Thickness profile of layer B/layer A/layer B = 1.5 μm/9 μm/1.5 μm. The properties of the obtained film are shown in Table 2, Surface resistivity of this film was $5 \times 10^{11}$ Ω/□ and it had excellent antistatic properties and good hand cutting quality. The corona discharge treated version of this film showed excellent antistatic properties and its adhesion properties with celocolor ink was rated as 3 (excellent) in the above-shown rating criterion.

13

Example 2-2:

A 87:3:10 blend (blend II) of the pellets of polyester 1, polyester 8 and polyester 7 was prepared, and this blend II and the pellets of polyester 2 were melted in the separate extruders and passed through a lamination die to extrude a binary 3-layer (blend II (layer B)/polyester 2 (layer A)/blend II (layer B)) laminated polyester resin onto a cooling drum with a surface temperature of 30°C whereby the extrudate was rapidly cooled to obtain an approximately 180 μm thick non-stretched film. This film was stretched 3.8 times in the machine direction at 80°C, then after preheated in a tenter, further stretched 4.0 times in the transverse direction at 90°C and heat treated at 230°C for 10 seconds to obtain a 12 μm thick laminated polyester film. Thickness profile of layer B/layer A/layer B = 1.5 μm/9 μm/1.5 μm. The properties of the obtained film are shown in Table 2. Surface resistivity of this film was $5 \times 10^{11}$ Ω/□, and it had excellent antistatic properties, excellent ink adhesion and good hand cutting quality. Celocolor ink adhesion of this film was rated as 3 in the above-shown rating criterion.

Example 2-3:

The pellets of polyester 1 and the pellets of polyester 5 were melted in the separate extruders and passed through a lamination die to extrude a binary 3-layer (polyester 1 (layer B)/polyester 5 (layer A)/polyester 1 (layer B)) laminated polyester resin onto a cooling drum with a surface temperature of 30°C whereby the extrudate was rapidly cooled to obtain an approximately 250 μm thick non-stretched film. This film was stretched 3.5 times in the machine direction at 85-110°C to obtain a monoaxially (in the machine direction) stretched film. A coating solution A of the formulation shown below was applied on one side of the film, and then the film was further stretched 4.0 times in the transverse direction in an atmosphere of 85-110°C, and heat treated at 235°C to obtain a 16 μm thick laminated polyester film. Thickness profile of the layer B/layer A/layer B = 2 μm/12 μm/2 μm. The properties of the obtained film are shown in Table 2. Solids thickness of the coating layer was 0.08 μm. This film had surface resistivity of $1 \times 10^{12}$ Ω/□ and showed excellent antistatic properties and good hand cutting quality.

Coating solution A

A coating solution was prepared by dissolving in water the following compounds (1) to (4) to the solids contents shown in parts below.

(1) A polyurethane Hydran AP-40" (trade name) produced by DAINIPPON INK AND CHEMICALS, INCORPORATED, 60 parts
(2) A polyester "Fine tect™ ES-670" (trade name) produced by DAINIPPON INK AND CHEMICALS, INCORPORATED 25 parts
(3) An alkylsulfonate "Latemul PS" (trade name) produced by Kao Corporation, 5 parts
(4) Methoxymethylolmelamine as crosslinking agent, 10 parts

Example 2-4

The pellets of polyester 1 and the pellets of polyester 6 were melted in the separate extruders and passed through a lamination die to extrudate a binary 3-layer (polyester 1 (layer B)/polyester 6 (layer A)/polyester 1 (layer B)) laminated polyester resin onto a cooling drum with a surface temperature of 30°C whereby the extrudate was rapidly cooled to obtain an approximately 250 μm thick non-stretched film. This film was stretched 3.5 times in the machine direction at 85-100°C to obtain a monoaxially (in the machine direction) stretched film. A coating solution B of the formulation shown below was applied on both sides of the film, and the film was further stretched 4.0 times in the transverse direction in an atmosphere of 85-110°C and then heat treated at 235°C to obtain a 16 μm thick laminated polyester film. Thickness profile of the layer B/layer A/layer B structure was 2 μm/12 μm/2 μm. The properties of the obtained film are shown in Table 2. Surface resistivity of the film was $2 \times 10^{10}$ Ω/□, and it had excellent antistatic properties and good hand cutting quality. Celocolor ink adhesion of the coating layer of the film was rated 3 in the above-shown criterion.

Coating solution B:

This coating solution was prepared by dissolving the following compounds (1) to (3) in water to the solids contents shown in parts below:

(1) Polydiallyldimethylammonium chloride as antistatic agent (average molecular weight = ca. 30,000), 20 parts.

(2) Nonionic water dispersion of methyl methacrylate/ethyl acrylate/methylolacrylamide copolymer (monomeric ratio (mol%) = 47.5/47.5/5), 60 parts
(3) Crosslinking agent (methoxymethylolamine), 20 parts

Comparative Example 2:

The same procedure as defined in Example 2-1 was repeated except that a polyester with a 3% molar ratio of the isophthalic acid moiety, obtained in the same way as polyester 2, was used as layer A and polyester 1 was used singly as layer B to obtain a film. The properties of the obtained film are shown in Table 2. This film was poor in antistatic properties and hand cutting quality.
The properties of the obtained films are shown in Table 2.

## Table 2

|  | Example 2-1 | Example 2-2 | Example 2-3 |
|---|---|---|---|
| Thickness ($\mu$m) (B/A/B) | 1.5/9.0/1.5 | 1.5/9.0/1.5 | 2.0/12.0/2.0 |
| Layer A melting point (°C) | 227 | 239 | 230 |
| Layer B melting point (°C) | 254 | 254 | 255 |
| Antistatic coating | No | No | Yes |
| Tensile break strength, machine direction (MPa) | 90 | 180 | 80 |
| Tensile break strength, transverse direction (MPa) | 90 | 190 | 90 |
| Thermal shrinkage, machine direction (%) | 2.5 | 2.5 | 2.5 |
| Thermal shrinkage, transverse direction (%) | 2.5 | 2.5 | 2.5 |
| Haze (%) | 3 | 3 | 3.1 |
| Tear properties | A | B | A |
| Wetting tension (mN/N) | $5 \times 10^{11}$ | $5 \times 10^{11}$ | $1 \times 10^{12}$ |

Table 2 (Continued)

| | Example 2-4 | Comp. Example 2 |
|---|---|---|
| Thickness ($\mu$m) (B/A/B) | 2.0/12.0/2.0 | 1.5/9.0/1.5 |
| Layer A melting point (°C) | 242 | 245 |
| Layer B melting point (°C) | 255 | 254 |
| Antistatic coating | Yes | No |
| Tensile break strength, machine direction (MPa) | 80 | 210 |
| Tensile break strength, transverse direction (MPa) | 90 | 230 |
| Thermal shrinkage, machine direction (%) | 2.5 | 2.1 |
| Thermal shrinkage, transverse direction (%) | 2.5 | 2.1 |
| Haze (%) | 3.1 | 2.9 |
| Tear properties | A | C |
| Wetting tension (mN/N) | $2 \times 10^{10}$ | $\geq 10^{11}$ |

<Examples 3-1 to 3-5 and Comparative Example 3>

These examples are presented to explain the embodiments relating to item (3) in the first aspect of the present invention.

Example 3-1:

The pellets of polyester 1 and the pellets of polyester 3 were melted in the separate extruders and passed through a lamination die to extrude a binary 3-layer (polyester 1 (layer B)/polyester 3 (layer A)/polyester 1 (layer B)) laminated polyester resin onto a cooling drum with a surface temperature of 30°C whereby the extrudate was rapidly cooled to obtain an approximately 180 $\mu$m thick non-stretched film. This film was stretched 3.8 times in the machine direction at 80°C, then after preheated in a tenter, further stretched 4.0 times in the transverse direction at 90°C, and heat treated at 230°C for 10 seconds to obtain a 12 $\mu$m thick laminated polyester film having a thickness profile of layer B/layer A/layer B = 1.5 $\mu$m/9 $\mu$m/1.5 $\mu$m. The properties of the obtained film are shown in Table 3.

Aluminum oxide was deposited on this film to a deposit thickness of 20 nm to obtain a deposited film. Oxygen transmission rate of this deposited film was 4 cc/m$^2$·day·atm, and it was possible to obtain a barrier film with excellent easy-to-tear properties.

Example 3-2:

The same procedure as defined in Example 3-1 was conducted except for use of polyester 2 as layer A of Example 3-1 to obtain a 12 $\mu$m thick laminated polyester film. Thickness profile of layer B/layer A/layer B was 1.5 $\mu$m/9 $\mu$m/1.5 $\mu$m. The properties of the obtained film are shown in Table 3.

Polyvinyl alcohol with a polymerization degree of 200 and a saponification degree of 95 mol% was gradually supplied into 75°C hot water with stirring, and after it has been uniformly dispersed, the solution was filtered and cooled to obtain a 20% PVA solution. Surfynol 440 (produced by Nisshin Chemical Industry Co., Ltd.) was blended in an amount of 0.1% for improving coating properties. The surface of the said film was subjected to corona discharge treatment to make its wetting tension not less than 56 dynes/cm, and the above solution was applied on this side of the film to form a 2 μm thick PVA coating. Oxygen transmission rate of this film was 10 cc/m$^2$·day·atm, and it was possible to obtain a barrier film with excellent easy-to-tear properties.

Example 3-3:

The pellets of polyester 1 and the pellets of polyester 5 were melted in the separate extruders passed through a lamination die to extrude a binary 3-layer (polyester 1 (layer B)/polyester 5 (layer A)/polyester 1 (layer B)) laminated polyester resin onto a cooling drum with a surface temperature of 30°C whereby the extrudate was rapidly cooled to obtain an approximately 250 μm thick non-stretched film. This film was stretched 3.8 times in the machine direction at 80°C, then after preheated in a tenter, further stretched 4.1 times in the transverse direction at 90°C and heat treated at 225°C for 10 seconds to obtain a 16 μm thick laminated polyester film. Thickness profile of layer B/layer A/layer B was 2 μm/12 μm/2 μm. The properties of the obtained film are shown in Table 3.
Aluminum was deposited on this film to a deposit thickness of 40 nm to obtain a deposited film. Oxygen transmission rate of the obtained film was 2 cc/m$^2$·day·atm, and it was possible to obtain a barrier film with excellent easy-to-tear properties.

Example 3-4:

The pellets of polyester 1 and the pellets of polyester 6 were melted in the separate extruders and passed through a lamination die to extrude a binary 3-layer (polyester 1 (layer B)/polyester 6 (layer A)/polyester 1 (layer B)) laminated polyester resin onto a cooling drum with a surface temperature of 30°C whereby the extrudate was rapidly cooled to obtain an approximately 250 μm thick non-stretched film. This film was stretched 3.8 times in the machine direction at 80°C, then after preheated in a tenter, further stretched 4.1 times in the transverse direction at 90°C, and heat treated at 230°C for 10 seconds to obtain a 16 μm thick laminated polyester film. Thickness profile of the layer B/layer A/layer B structure was 2 μm/12 μm/2 μm. The properties of the obtained film are shown in Table 4.
Aluminum oxide was deposited on this film to a deposit thickness of 20 nm to obtain a deposited film. Oxygen transmission rate of this film was 4 cc/m$^2$·day·atm, and it was possible to obtain a barrier film having excellent easy-to-tear properties.

Example 3-5

The pellets of polyester 1 and the pellets of polyester 5 were melted in the separate extruders and passed through a lamination die to extrude a binary 3-layer (polyester 1 (layer B)/polyester 5 (layer A)/polyester 1 (layer B)) laminated polyester resin onto a cooling drum with a surface temperature of 30°C whereby the extrudate was rapidly cooled to form a film, and this film was stretched 3.8 times in the machine direction at 80°C to obtain a film stretched in the machine direction alone.
A coating solution prepared by blending 35 parts, 30 parts, 25 parts and 10 parts (all by weight), respectively, of resin a, resin b, resin c and resin d described below, using water as medium, was applied on one side of the said film, and this film was further stretched 4.0 times in the transverse direction at 85-110°C and then heat treated at 225°C to obtain a 16 μm thick biaxially stretched film with an undercoating thickness of 0.1 μm. Thickness profile of this film was 2 μm/12 μm/2 μm. The properties of this film are shown in Table 4.
Silicon oxide was deposited on the undercoating side of this film to a deposit thickness of 20 nm to obtain a deposited film. Oxygen transmission rate of this film was 2 cc/m$^2$·day·atm, and it was possible to obtain a barrier film with excellent easy-to-tear properties.

Resin a: An aqueous acrylic resin. A mixture of 40 parts by weight of ethyl acrylate, 30 parts by weight of methyl methacrylate, 20 parts by weight of methacrylic acid and 10 parts by weight of glycidyl methacrylate was subjected to solution polymerization in ethyl alcohol, and after polymerization, the solution was heated while adding water to remove ethyl alcohol and adjusted to pH 7.5 with ammonia water to obtain a coating solution of an aqueous acrylic resin (no-emulsifier type).
Resin b: "Epocros WS-500" (Nippon Shokubai Co., Ltd.), an oxazoline group-containing water-soluble polymer solution (water : 1-methoxy-2-isopropanol = 1 : 2).
Resin c: An aqueous polyurethane resin water-based coating material. First, a polyester polyol comprising 664 parts by weight of terephthalic acid, 631 parts by weight of isophthalic acid, 472 parts by weight of 1,4-butanediol and 447 parts by weight of neopentyl glycol was prepared. To this polyester polyol were added 321 parts by weight of adipic acid and 268 parts by weight of dimethylolpropionic acid to obtain a pendant carboxyl group-containing polyester polyol A. To 1,880 parts by weight of this polyester polyol A was further added 160 parts by weight of hexamethylene diiocyanate to obtain an aqueous polyurethane resin water-based coating material.

Resin d: "Polyester WR-961" (Nippon Synthetic Chemical Industry Co., Ltd., a water-dispersed type polyester having carboxyl groups.

Comparative Example 3:

The same procedure as defined in Example 3-1 was repeated except that the molar ratio of the isophthalic acid in the dicarboxylic acid moiety in the layer A was 3%. The properties of the obtained film are shown in Table 4.

Table 3

|  | Example 3-1 | Example 3-2 | Example 3-3 |
|---|---|---|---|
| Thickness (µm) (B/A/B) | 1.5/9.0/1.5 | 1.5/9.0/1.5 | 2.0/12.0/2.0 |
| Features of layer A resin | IPA 15 mol% PET copolymer | IPA 6 mol% PET copolymer | IPA 22 mol% PET copolymer: 35 parts; PET: 65 parts |
| Features of layer B resin | PET | PET | PET |
| Heat treatment temperature (°C) | 230 | 230 | 225 |
| Layer A melting point (°C) | 227 | 239 | 230 |
| Layer B melting point (°C) | 254 | 254 | 255 |
| Tensile break strength, machine direction (MPa) | 90 | 180 | 80 |
| Tensile break strength, transverse direction (MPa) | 90 | 190 | 90 |
| Thermal shrinkage, machine direction (%) | 2.5 | 2.5 | 2.5 |
| Thermal shrinkage, transverse direction (%) | 2.5 | 2.5 | 2.5 |
| Haze (%) | 3 | 3 | 3.1 |
| Tear properties | A | B | A |
| (Note) PET: polyethylene terephthalate; IPA: isophthalic acid | | | |

Table 4

|  | Example 3-4 | Example 3-5 | Comp. Example 3 |
|---|---|---|---|
| Thickness (µm) (B/A/B) | 2.0/12.0/2.0 | 2.0/12.0/2.0 | 1.5/9.0/1.5 |
| Features of layer A resin | IPA 11 mol% PBT copolymer | IPA 22 mol% PET copolymer 65 parts; PET: 35 parts | IPA 3 mol% PET copolymer |
| Features of layer B resin | PET | PET | PET |
| Heat treatment temperature (°C) | 230 | 225 | 230 |
| Layer A melting point (°C) | 242 | 230 | 245 |

Table 4 (continued)

|  | Example 3-4 | Example 3-5 | Comp. Example 3 |
|---|---|---|---|
| Layer B melting point (°C) | 255 | 255 | 254 |
| Tensile break strength, machine direction (MPa) | 90 | 80 | 210 |
| Tensile break strength, transverse direction (MPa) | 100 | 90 | 230 |
| Thermal shrinkage, machine direction (%) | 2.5 | 2.5 | 2.1 |
| Thermal shrinkage, transverse direction (%) | 2.3 | 2.5 | 2.1 |
| Haze (%) | 3.2 | 3.1 | 2.9 |
| Tear properties | A | A | C |
| (Note) PET: polyethylene terephthalate; PBT: polybutyrene terephthalate; IPA: isophthalic acid. | | | |

<Examples 4-1 to 4-4 and Comparative Example 4>

These examples are purposed to explain the second aspect of the present invention.

Example 4-1:

The pellets of polyester 1 and the pellets of polyester 3 were melted in the separate extruders and passed through a lamination die to extrude a binary 3-layer (polyester 1 (layer B)/polyester 3 (layer A)/polyester 1 (layer B)) laminated polyester resin onto a cooling drum with a surface temperature of 30°C whereby the extrudate was rapidly cooled to obtain an approximately 180 μm thick non-stretched film. This film was stretched 3.8 times in the machine direction at 80°C, then after preheated in a tenter, further stretched 4.0 times in the transverse direction at 90°C and heat treated at 230°C for 10 seconds to obtain a 12 μm thick laminated polyester film. Thickness profile of the layer B/layer A/layer B structure was 1.5 μm/9 μm/1.5 μm. The properties of the obtained film are shown in Table 5. Aluminum oxide was deposited on this film to a deposit thickness of 20 nm to obtain a deposited film. Oxygen transmission rate of the obtained film was 4 cc/m$^2$·day·atm. In evaluation of this film as a covering for PTP packages, it showed excellent tear-open properties.

Example 4-2:

The pellets of polyester 1 and the pellets of polyester 5 were melted in the separate extruders and passed through a lamination die to extrude a binary 3-layer (polyester 1 (layer B)/polyester 5 (layer A)/polyester 1 (layer B)) laminated polyester resin onto a cooling drum with a surface temperature of 30°C whereby the extrudate was rapidly cooled to obtain an approximately 250 μm thick non-stretched film. This film was stretched 3.8 times in the machine direction at 80°C, then after preheated in a tenter, further stretched 4.1 times in the transverse direction at 90°C and heat treated at 225°C for 10 seconds to obtain a 16 μm thick laminated polyester film with a thickness profile of layer B/layer A/layer B = 2 μm/12 μm/2 μm. The properties of the obtained film are shown in Table 5. Polyvinyl alcohol (PVA) with a polymerization degree of 200 and a saponification degree of 95 mol% was gradually supplied to 75°C hot water with stirring, and after it has been uniformly dispersed, the solution was filtered and then cooled to obtain a 20% PVA solution. "Surfynol 440" (produced by Nisshin chemical Industry Co.., Ltd.) was added in an amount of 0.1% for improving coating properties. The film obtained in Example 4-2 was subjected to corona discharge treatment on the surface to make its wetting tension not less than 56 dynes/cm, and the above coating solution was applied thereon to provide a PVA film with a coating thickness of 2 μm. Oxygen transmission rate of this film was 10 cc/m$^2$·day·atm. In evaluation of this film as covering for PTP packages, it showed excellent tear-open properties.

Example 4-3:

The pellets of polyester 1 and the pellets of polyester 6 were melted in the separate extruders and passed through a lamination die to extrude a binary 3-layer (polyester 1 (layer B)/polyester 6 (layer A)/polyester 1 (layer B)) laminated polyester resin onto a cooling drum with a surface temperature of 30°C whereby the extrudate was rapidly cooled to obtain an approximately 250 µm thick non-stretched film. This film was stretched 3.8 times in the machine direction at 80°C, then after preheated in a tenter, further stretched 4.1 times in the transverse direction at 90°C and heat treated at 230°C for 10 seconds to obtain a 16 µm thick laminated polyester film with a thickness profile of layer B/layer A/layer B = 2 µm/12 µm/2 µm. The properties of the obtained film are shown in Table 5. A 10 µm thick aluminum foil was laminated on one side of this film with a polyester adhesive ("Vylon 240" produced by Toyo Boseki Co., Ltd.) to obtain a covering. In evaluation of this film as a covering for PTP packages, it showed excellent tear-open properties.

Example 4-4:

Chips were prepared by blending 20% by weight of titanium dioxide (anatase crystal type) having an average particle diameter of 0.32 µm with polyester 3, and by using these chips, a 12 µm thick laminated polyester film was obtained in the same way as in Example 4-1. Thickness profile of the layer B/layer A/layer B structure was 1.5 µm/9 µm/1.5 µm. Optical density of this film was 0.4, indicating excellent opacifying properties of this film. Other properties of this film are shown in Table 6. In evaluation of this film as a covering for PTP packages, it showed excellent tear-open properties.

Comparative Example 4:

The same procedure as defined in Example 4-1 was repeated except that a 1 : 1 mixture of polyester 1 and polyester 2 was used as layer A to obtain a 12 µm thick laminated polyester film with a thickness profile of layer B/layer A/layer B = 1.5 µm/9 µm/1.5 µm. The properties of the obtained film are shown in Table 6. In evaluation of this film as a covering for PTP packages, it was impossible to break the covering and the contained tablet could not be taken out.

Table 5

|  |  | Example 4-1 | Example 4-2 | Example 4-3 |
|---|---|---|---|---|
| Thickness (µm) (B/A/B) |  | 1.5/9.0/1.5 | 2.0/12.0/2.0 | 2.0/12.0/2.0 |
| Features of layer A resin |  | IPA 15 mol% PET copolymer | IPA 22 mol% PET copolymer: 35 parts; PET: 65 parts | IPA 11 mol% PBT copolymer |
| Features of layer B resin |  | PET | PET | PET |
| Heat treatment temperature (°C) |  | 230 | 225 | 230 |
| Layer A melting point (°C) |  | 227 | 230 | 242 |
| Layer B melting point (°C) |  | 254 | 255 | 255 |
| Tensile break strength, machine direction (MPa) |  | 90 | 80 | 90 |
| Tensile break strength, transverse direction (MPa) |  | 90 | 90 | 100 |
| Thermal shrinkage, machine direction (%) |  | 2.5 | 2.5 | 2.5 |
| Thermal shrinkage, transverse direction (%) |  | 2.5 | 2.5 | 2.3 |
| Haze (%) |  | 3 | 3.1 | 3.2 |
| Tear properties |  | A | A | A |
| (Note) PET: polyethylene terephthalate; IPA: isophthalic acid |

Table 6

| | Example 4-4 | Comp. Example 4 |
|---|---|---|
| Thickness (µm) (B/A/B) | 1.5/9.0/1.5 | 1.5/9.0/1.5 |
| Features of layer A resin | IPA 15 mol% PET copolymer containing 20 wt% of titanium dioxide | IPA 3 mol% PET copolymer |
| Features of layer B resin | PET | PET |
| Heat treatment temperature (°C) | 230 | 230 |
| Layer A melting point (°C) | 227 | 245 |
| Layer B melting point (°C) | 254 | 254 |
| Tensile break strength, machine direction (MPa) | 80 | 210 |
| Tensile break strength, transverse direction (MPa) | 80 | 230 |
| Thermal shrinkage, machine direction (%) | 2.5 | 2.1 |
| Thermal shrinkage, transverse direction (%) | 2.5 | 2.1 |
| Haze (%) | Transmitted light density: 0.4 | 2.9 |
| Tear properties | A | C |
| (Note) PET: polyethylene terephthalate; PBT: polybutyrene terephthalate; IPA: isophthalic acid. | | |

## INDUSTRIAL APPLICABILITY

According to the first aspect of the present invention, it is possible to provide a film suited for use as a packaging material which excels in adhesion, antistatic and gas barrier properties and also has good hand cutting quality. Also, according to the second aspect of the present invention, it is possible to provide a covering with good tear-open properties at low cost and, as required, to provide a covering with good barrier and tear-open properties without using aluminum foil.

## Claims

1.  A biaxially stretched laminated polyester film having tensile break strengths in the machine and transverse directions of 40 to 200 MPa, and satisfying at least one of the following items:

    (1) wetting tension of at least one side of the film is not less than 48 mN/m;
    (2) surface resistivity of at least one side of the film is not more than $5 \times 10^{12}$ Ω/□; and
    (3) a barrier layer is provided on at least one side of the film.

2.  A film according to claim 1, wherein said film comprises a layer A comprising a polyester material comprising at least one of copolymeric polyethylene terephthalate and copolymeric polybutyrene terephthalate, and a layer B comprising a polyester material, and the melting point of the layer B is 10°C or more higher than that of the layer A.

3.  A film according to claim 1 or 2, wherein said film comprises a layer A comprising a polyester material comprising at least one of copolymeric polyethylene terephthalate and copolymeric polybutyrene terephthalate, and a layer B comprising a polyester material, the melting point of the layer A is not higher than 240°C, and the melting point of the layer B is not lower than 245°C.

4.  A film according to claim 2 or 3, wherein the layer B contains 0.3 to 5.0% by weight of ethylene glycol having a molecular weight of 1,000 to 50,000.

**5.** A film according to any one of claims 2 to 4, wherein surface resistivity of at least one side of the film is not more than $5 \times 10^{12}$ Ω/□, and the layer B contains an antistatic agent.

**6.** A film according to any one of claims 2 to 5, wherein surface resistivity of at least one side of the film is not more than $5 \times 10^{12}$ Ω/□, and the film has a coat comprising an antistatic agent.

**7.** A film according to any one of claims 2 to 6, wherein a barrier layer is provided on at least one side of the film, and said barrier layer is a layer formed by coating said one side of the film with a solution of a high polymeric compound or a mixture of a high polymeric compound and an inorganic compound, and drying the coating.

**8.** A film according to any one of claims 2 to 6, wherein a barrier layer is provided on at least one side of the film and said barrier layer is a metal deposit.

**9.** A film according to any one of claims 2 to 6, wherein a barrier layer is provided on at least one side of the film, and said barrier layer is a layer formed by depositing a metal oxide.

**10.** A biaxially stretched laminated polyester film for covering, which film has tensile break strength in the machine and transverse directions of 41 to 170 MPa.

<div align="center">

**INTERNATIONAL SEARCH REPORT**

</div>

| | International application No. |
|---|---|
| | PCT/JP2004/002059 |

**A. CLASSIFICATION OF SUBJECT MATTER**
Int.Cl⁷ B32B27/36

According to International Patent Classification (IPC) or to both national classification and IPC

**B. FIELDS SEARCHED**

Minimum documentation searched (classification system followed by classification symbols)
Int.Cl⁷ B32B1/00-35/00

Documentation searched other than minimum documentation to the extent that such documents are included in the fields searched
Jitsuyo Shinan Koho          1926-1996   Toroku Jitsuyo Shinan Koho   1994-2004
Kokai Jitsuyo Shinan Koho   1971-2004   Jitsuyo Shinan Toroku Koho   1996-2004

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 57-82046 A (Toray Industries, Inc.),<br>22 May, 1982 (22.05.82),<br>Full text; particularly, examples<br>(Family: none) | 1-6<br>7-10 |
| X<br>Y | JP 6-190969 A (Toray Industries, Inc.),<br>12 July, 1994 (12.07.94),<br>Full text; particularly, Claims;<br>Par. No. [0021]; examples<br>& JP 6-79776 A        & EP 581970 A<br>& US 5747174 A | 1-3,5-9<br>4,8-10 |
| X<br>Y | JP 2002-361797 A (Toyobo Co., Ltd.),<br>18 December, 2002 (18.12.02),<br>Full text; particularly, Claims; Par. Nos.<br>[0021], [0034] to [0036], [0042]; examples<br>(Family: none) | 1-3,5,6,8,10<br>4,7,9 |

☒  Further documents are listed in the continuation of Box C.        ☐  See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>18 May, 2004 (18.05.04) | Date of mailing of the international search report<br>01 June, 2004 (01.06.04) |
|---|---|
| Name and mailing address of the ISA/<br>Japanese Patent Office | Authorized officer |
| Facsimile No. | Telephone No. |

Form PCT/ISA/210 (second sheet) (January 2004)

**EP 1 598 182 A1**

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | JP 5-104618 A (Toyobo Co., Ltd.),<br>27 April, 1993 (27.04.93),<br>Full text<br>(Family: none) | 1-3,5,6<br>4,7-10 |
| X<br>Y | JP 8-244189 A (Diafoil Hoechst Co., Ltd.),<br>24 September, 1996 (24.09.96),<br>Full text<br>(Family: none) | 1-3,5,6,8,9<br>4,7 |
| X | JP 2-43047 A (Toray Industries, Inc.),<br>13 February, 1990 (13.02.90),<br>Examples 4, 5; table 2<br>(Family: none) | 1-3 |
| Y | JP 2000-233481 A (Mitsubishi Polyester Film Corp.),<br>29 August, 2000 (29.08.00),<br>Full text<br>(Family: none) | 4 |
| Y | JP 2001-293833 A (Teijin Ltd.),<br>23 October, 2001 (23.10.01),<br>Claims<br>(Family: none) | 7 |
| Y | JP 2001-9983 A (Toray Industries, Inc.),<br>16 January, 2001 (16.01.01),<br>Claims<br>(Family: none) | 7 |
| Y | JP 2002-178450 A (Mitsubishi Polyester Film Corp.),<br>26 June, 2002 (26.06.02),<br>Full text<br>(Family: none) | 10 |
| P,X | JP 2003-220678 A (Unitika Ltd.),<br>05 August, 2003 (05.08.03),<br>Full text<br>(Family: none) | 1,4,5,8,9 |
| A | JP 59-62149 A (Toyobo Co., Ltd.),<br>09 April, 1984 (09.04.84),<br>Full text<br>(Family: none) | 1-10 |

Form PCT/ISA/210 (continuation of second sheet) (January 2004)